# EUROPEAN PATENT SPECIFICATION

(11) **EP 3 141 748 B1**
(45) Date of publication and mention of the grant of the patent: **27.06.2018**
(21) Application number: 16154341.8
(22) Date of filing: 04.02.2016
(51) Int. Cl.: F04B 1/04, F04B 17/03, F04B 1/053, F03C 1/28, F03C 1/04

(54) **HYDRAULIC MACHINE OF RADIAL-PISTON TYPE AND WIND TURBINE POWER GENERATING APPARATUS**
HYDRAULISCHE MASCHINE VOM RADIALKOLBENTYP UND WINDTURBINENSTROMERZEUGUNGSVORRICHTUNG
MACHINE HYDRAULIQUE DE TYPE PISTONS RADIAUX ET APPAREIL DE GÉNÉRATION D'ÉNERGIE ÉOLIENNE

(30) Priority: 11.09.2015 JP 2015179015
(43) Date of publication of application: 15.03.2017
(73) Proprietor: Mitsubishi Heavy Industries, Ltd., Tokyo 108-8215 (JP)
(72) Inventor: Umeda, Akihiko, Tokyo, 108-8215 (JP); Hayashi, Noriyuki, Tokyo, 108-8215 (JP); Kagimoto, Yoshimi, Tokyo, 108-8215 (JP); Uchida, Michiya, Tokyo, 108-8215 (JP); Ochiai, Hiroyasu, Tokyo, 108-8215 (JP); Uehara, Osamu, Tokyo, 108-8215 (JP); Yoshihiro, Shinya, Tokyo, 108-8215 (JP)
(74) Representative: Henkel, Breuer & Partner

(56) References cited:
- US-A1- 2012 060 685
- US-A1- 2013 205 996
- US-A1- 2014 298 988

## Description

### TECHNICAL FIELD

The present disclosure relates to a hydraulic machine of radial-piston type with a plurality of pistons arranged in a radial fashion and a wind turbine power generating apparatus.

### BACKGROUND ART

A conventionally known hydraulic machine of radial-piston type includes a plurality of pistons arranged in a radial fashion, a plurality of cylinders for guiding reciprocating motion of the respective pistons, rollers mounted to the respective pistons, and a cam configured to rotate relative to the pistons and the cylinders. In this hydraulic machine of radial-piston type, the rollers are configured to move rolling on the cam surface of the cam, so that the mode of motion is converted between the reciprocating motion of the pistons reciprocating along the cylinders with the rollers and the rotational motion of the cam (see JP2014-214683A and GB2484890A, for instance).

In a rotary machine like a hydraulic machine of radial-piston type, wear of a contact surface that contacts dynamically upon rotation, e.g. rolling contact or sliding contact, affects the lifetime of the rotary machine greatly. Thus, in the hydraulic machine of radial-piston type described in JP2014-214683A, the lubricating performance of the cam surface is improved and the contact state between the cam surface and the outer circumferential surfaces of the rollers is maintained to be in good condition to extend the lifetime.

Meanwhile, the rollers rolling on the cam surface may be displaced in the axial direction due to various causes such as a side force applied from the cam. For instance, if the cylindricity of a roller is low due to manufacture tolerance or the like, the peripheral speed may differ between the opposite ends of the roller, and the roller may rotate (skew) about the axis of the cylinder with the piston. If a force is applied from the cam surface while the roller is skewing, a load in a thrust direction (hereinafter, referred to as a thrust force) occurs on the roller, and the roller slides sideways in the thrust direction (the width direction of the roller) to bring about displacement of the roller in the axial direction, which may disturb smooth operation of the hydraulic machine of radial-piston type.

In view of this, in GB2484890A, a pair of side plates is disposed on either side of the cam surface to restrict the displacement of the roller in the axial direction within the space between the pair of side plates, from the perspective of suppressing the displacement of the roller in the axial direction.

US 2014/298988 A1 discloses a radial piston machine which includes at least one piston unit with a piston and at least one rolling element rotatably mounted in a rolling element receptable of the piston. The piston of the piston unit is polished.

US 2012/060685 A1 discloses a variable displacement fluid working machine including an inward ring and an outward ring, one of the inward ring and the outward ring including a rotatable ring cam coupled to a drive shaft, the other including a plurality of radially extending piston cylinders circumferentially spaced around the respective ring. The outward ring has first and second axially spaced structural members and a plurality of demountable blocks demountably retainable therebetween, the demountable blocks having either piston cylinders or ring cam segments. The demountable blocks are removable radially to facilitate maintenance and repair and to facilitate radial access to the inward ring.

US 2013/205996 A1 discloses apiston for a radial piston machine including a metal core that is substantially provided with a casing made of plastic. The casing is configured to be produced from PEEK together with a bearing shell as one piece and injection-molded onto the core.

### SUMMARY

However, in a case where side plates are disposed on either side of the cam surface to restrict the displacement of the roller in the axial direction as in GB2484890A, the side plates contact the roller end surface to cause wear during operation of the hydraulic machine of radial-piston type, which may shorten the lifetime of the hydraulic machine. In other words, since the side plates rotate about the center axis of the hydraulic machine with the cam but the roller rotates about the rotational center of the roller, the side plates and the roller end surface do not move in exactly the same direction, which may bring about slide (friction) between the side plates and the roller end surface.

In this regard, GB2484890A does not disclose a configuration for reducing wear caused by contact between the side plates and the roller end surface.

Further, while the wear between the cam surface and the outer circumferential surface of the roller could be reduced in JP2014-214683A, no countermeasure is disclosed to address wear caused by contact between side plates and the roller end surface, because no side plates are provided in the first place.

In view of this, an object of at least some embodiments of the present invention is to provide a hydraulic machine of radial-piston type according to claim 1 and a wind turbine power generating apparatus according to claim 15 whereby it is possible suppress a decrease in the lifetime of the hydraulic machine of radial-piston type due to wear caused by contact between side plates and rollers during operation.
(1) A hydraulic machine of radial-piston type according to at least some embodiments of the present invention comprises: a plurality of pistons disposed along a radial direction of the hydraulic machine; a plurality of cylinders for guiding the respective pistons; a plurality of rollers disposed rotatably on the respective pistons; at least one cam configured to contact the plurality of rollers, the at least one cam being rotatable about a center axis of the hydraulic machine; and a side plate mounted to a rotary section of the hydraulic machine, the rotary section including the at least one cam and being configured to rotate about the center axis with the at least one cam. The side plate extends along the radial direction from the at least one cam toward the pistons. One of the side plate or each of the plurality of rollers includes a resin portion forming a first surface which is one of a roller end surface or a side plate surface facing the roller end surface. The other one of the side plate or each of the plurality of rollers includes a metal portion forming a second surface which is the other one of the side plate surface or the roller end surface. The metal portion includes a first region at which a distance along an axial direction of the rollers between the second surface including the metal portion and the first surface including the resin portion is minimum, and a second region at which the distance is
   larger than that of the first region, the second region forming an edge portion of the first region. The second region forming the edge portion of the metal portion has a surface roughness of at most 0.8 µmRa.
   In the present specification, "surface roughness" may be the arithmetic surface roughness (JIS B 0601, corresponding to ISO4287:1997).
   According to the above hydraulic machine of radial-piston type (1), one of each of the rollers or the side plate includes the resin portion forming the first surface, which is one of the end surface of the roller (hereinafter, referred to as "roller end surface" where appropriate) or the surface of the side plate (hereinafter, referred to as "side plate surface" where appropriate) facing the end surface of the roller. Further, the other one of each of the rollers or the side plate includes a metal portion forming the other one of the roller end surface or the side plate surface. Thus, during operation of the hydraulic machine of radial-piston type, the roller and the side plate contact each other via the metal portion and the resin portion. Thus, the maximum surface pressure generated at the boundary between the contact surfaces is lower than that generated between metals contacting each other, which makes it possible to suppress wear.
   Further, in the above configuration (1), the metal portion includes the first region at which the distance between the second surface formed by the metal portion and the first surface formed by the resin portion along the axial direction of the rollers is the minimum, and the second region having a distance larger than that of the first region and forming an edge portion of the first region. With this configuration, when the hydraulic machine of radial-piston type is stopped, the metal portion and the resin portion are not in contact at the second region because the above thrust force is not applied, even in a state where the metal portion and the resin portion are in contact at the first region.
   However, the prevent inventors conducted intensive researches and found that, in a case where one of the roller end surface or the side plate surface is formed by the resin portion, the above rotation (skewing) of the roller about the axis of the cylinder with the piston may deform the resin portion due to contact with the metal portion upon operation of the hydraulic machine of radial-piston type. The above thrust force increases a part at which the metal portion and the resin portion are in contact at the second region, at which there is no contact while the hydraulic machine of radial-piston type is stopped, and also increases a surface pressure at the contacting part in the second region, which may cause wear on the contact surface.
   In view of this, in the above configuration (1), the second region forming the edge portion of the metal portion has a surface roughness of at most 0.8 µmRa.
   In this way, even when the above thrust force is applied during operation of the hydraulic machine of radial-piston type, it is possible to suppress wear of the contact surfaces of the metal portion and the resin portion at the edge portion.
   As described above, addressing the wear taking account of the above thrust force in operation of the hydraulic machine of radial-piston type makes it possible to securely suppress a decrease in the lifetime of the hydraulic machine of radial-piston type due to wear caused by contact between the roller and the side plate.
(2) In some embodiments, in the above configuration (1), the surface roughness of the second region is at most 0.4 µmRa.
(3) In some embodiments, in the above configuration (1) or (2), the surface roughness of the second region is at most 0.2 µmRa.
   With the above configuration (2) or (3), even when the metal portion and the resin portion are in contact at the second region due to the above thrust force during operation of the hydraulic machine of radial-piston type, it is possible to suppress wear of the contact surfaces more effectively.
(4) In one embodiment, in any one of the above configurations (1) to (3), the side plate includes the resin portion forming the side plate surface, each of the rollers includes the metal portion forming the roller end surface, the metal portion includes a circular flat surface being the first region orthogonal to the axial direction of the rollers and a curved cross-sectional surface being the second region forming an outer circumferential edge of the circular flat surface, and the curved cross-sectional surface has a surface roughness of at most 0.8 µmRa.
   With the above configuration (4), the side plate surface is formed of the resin portion, and the roller end surface is formed of the metal portion, which facilitates attachment of the resin portion. Specifically, even in a case where a number of rollers (pistons) is provided, the resin portion only needs to be provided on the side plate disposed on a rotary section including a cam that engages with the many rollers. Thus, it is possible to simplify the attachment work of the resin portion.
   Further, the metal portion includes the circular flat surface being the first region orthogonal to the axial direction of the roller, and the cross-sectional curved surface being the second region forming the outer circumferential edge of the circular flat surface. As described above, since the outer circumferential edge of the roller end surface is formed by the curved cross-sectional surface, contact is smooth even if the roller rotates (skews) about a cylinder axis. Further, since the curved cross-sectional surface of the outer circumferential edge of the roller end surface has a surface roughness of at most 0.8 µmRa, it is possible to suppress wear of contact surfaces of the resin portion and the metal portion securely even in a case where deformation or a surface pressure increase occurs in the resin portion corresponding to the second region of the roller due to thrust caused by rotation (skewing) about a cylinder axis and the curved cross-sectional surface (metal portion) of the outer circumferential edge of the roller end surface contacts the resin portion (side plate).
(5) In another embodiment, in any one of the above configurations (1) to (3), each of the rollers includes the resin portion forming the roller end surface, the side plate includes the metal portion forming the side plate surface, the metal portion includes a flat surface being the first region orthogonal to an axial direction of the at least one cam and a curved cross-sectional surface being the second region forming an edge portion of the flat surface, and the curved cross-sectional surface has a surface roughness of at most 0.8 µmRa.
   In the above configuration (5), the side plate surface is formed of the metal portion, and the roller end surface is formed of the resin portion. With this configuration, when the resin portion is worn from contact with the metal portion, it is also possible to replace only the resin portion of the roller having the worn roller end surface among the plurality of rollers, which makes it easier to perform maintenance.
   Further, the metal portion includes a flat surface of the side plate being the first region orthogonal to the axial direction of the cam, and a curved cross-sectional surface being the second region forming the edge portion disposed between the flat surfaces of the side plate corresponding to the division parts of the cam divided into sections, or being the second region formed on the tip end portion of the side plate protruding in the radial direction from the cam toward the pistons. In this way, during operation of the hydraulic machine of radial-piston type, it is possible to suppress wear of the resin portion due to the edge portion of the metal portion. Further, since the cross-sectional curved surface of the edge portion of the side plate surface has a surface roughness of at most 0.8 µmRa, it is possible to suppress the wear of the contact surfaces of the metal portion (cross-sectional curved surface) and the resin portion securely.
(6) In some embodiments, in any one of the above configurations (1) to (5), the resin portion comprises a wear-resistant resin containing at least one of PEEK, PPS, PA, POM, or PTFE.
   With the above configuration (6), using the above resin material having an excellent wear-resistant property makes it possible to suppress wear of the resin portion more effectively.
(7) In some embodiments, in any one of the above configurations (1) to (6), each of the plurality of pistons is configured to reciprocate in accordance with a cyclic change, between a high pressure and a low pressure, of a pressure of a hydraulic chamber formed by the piston and corresponding one of the cylinders. The at least one cam includes a working surface which the roller contacts when the pressure of the working chamber is the high pressure and a breathing surface which the roller contacts when the pressure of the working chamber is the low pressure. The side plate is configured to contact the roller end surface only in a region surrounded by a cam surface and a curve separated from the cam surface by a radius of the roller at least in a range, in a circumferential direction, of the hydraulic machine, the range corresponding to the working surface.
   Generally in a hydraulic machine of radial-piston type, a load in a thrust direction (hereinafter, referred to as a thrust force) may be generated on the roller due to skewing of the roller. The thrust force is normally greater on the working surface than on the breathing surface of the cam. In view of this, in the above configuration (7), the side plate is configured to contact the end surface of the roller only in a region surrounded by the cam surface and the curve separated from the cam surface by a radius of the roller in at least a range, in the circumferential direction, of the hydraulic machine, the range corresponding to the working surface. In this way, it is possible to reduce the moment applied to the side plate about the side plate attachment part, as compared to a case where the roller end surface and the side plate surface contact closer to the pistons than the region surrounded by the cam surface and the curve is. Thus, it is possible to suppress damage to the side plate due to a thrust force of the roller and to improve the durability of the side plate.
(8) In one embodiment, in the above configuration (7), the side plate includes a side plate body having a root end portion fastened to an end surface of the at least one cam and a tip end portion protruding from the at least one cam toward the pistons in the radial direction, and a contact portion mounted to the tip end portion of the side plate body. The contact portion is configured to contact the roller end surface in a region of the roller end surface, the region being closer to the at least one cam than a rotational center of the roller is.
   With the above configuration (8), the root end portion of the side plate body is mounted to the end surface of the cam contacting the roller, which makes it possible to bring the side plate attaching part closer to a portion of the side plate receiving the thrust force from the roller end surface. Thus, it is possible to further reduce the moment acting on the side plate about the side plate attaching part.
   Further, since the side plate is fastened to the end surface of the cam via the root end portion, it is possible to simplify the fastening structure of the side plate. It is also possible to provide the cam and the side plate as an assembly, which makes it possible to improve the assembling performance of the cam and the side plate.
(9) In some embodiments, in any one of the above configurations (1) to (8), the side plate is configured to contact the roller end surface at such a position that a distance in the radial direction from the cam surface on which the rollers roll is at most 30% of a diameter of each of the rollers.
   With the above configuration (9), it is possible to suppress the moment acting on the side plate, and to improve the durability of the side plate.
(10) In some embodiments, in any one of the above configurations (1) to (9), the side plate is joined to the end surface of the at least one cam by a bolt.
   With the above configuration (10), it is possible to mount the side plate to the cam easily. Further, it is possible to make the side plate replaceable.
(11) In some embodiments, in any one of the above configurations (1) to (10), each of the at least one cam and the side plate is divided into a plurality of sections in a circumferential direction of the center axis, and the number of the sections of the side plate is not more than the number of the sections of the at least one cam.
   With the above configuration (11), with the cam and the side plate having a divided structure, it is possible to improve the manufacturability of the cam and the side plate. Further, while the number of sections into which the cam is to be divided is often determined from the perspective of the handling performance in manufacture, there are fewer requirements for the number of sections of the side plate, and thus the design flexibility is high for the divided structure of the side plate. Therefore, with the number of sections of the side plate being not more than the number of sections of the cam, the side plate only needs to be mounted to one cam or to a cam assembly in which a plurality of cams are assembled, upon assembly of the hydraulic machine. Thus, it is possible to improve the assembly performance of the cam and the side plate.
(12) In some embodiments, in any one of the above configurations (1) to (11), the at least one cam comprises a plurality of cams arranged in at least two rows in a direction of the center axis, and the pistons and the rollers are arranged in accordance with the rows of the cams.
   With the above configuration (12), when the number of the pistons is constant, the more rows of cams and corresponding pistons and rollers are provided, the fewer pistons are disposed per each row. Thus, it is possible to reduce the diameter of the cams. As a result, it is possible to make the hydraulic machine compact in the radial direction. Further, with the phase of the cams in the circumferential direction varied among the plurality of rows of the cams, it is possible to reduce oscillation of the hydraulic machine upon driving.
(13) In some embodiments, in any one of the above configurations (1) to (12),
   the hydraulic machine of radial-piston type further comprises: a cylinder block in which the plurality of cylinders for guiding the respective pistons is formed; a pair of tapered bearings for supporting the rotary section of the hydraulic machine rotatably to a stationary section of the hydraulic machine, the stationary section including the cylinder block, and the pair of tapered bearings being disposed between the rotary section and the stationary section at opposite ends of the hydraulic machine; and a pre-compression part for applying a pre-load to at least one tapered bearing of the pair of tapered bearings in a direction toward a center of the hydraulic machine.
   The pair of bearings having the above configuration (13) mainly has the function of rotatably supporting the rotary section to the stationary section. At this time, applying a pre-load to at least one tapered bearing of the pair of bearings makes it possible to maintain an appropriate relative position of the rotary section and the stationary section.
(14) In one embodiment, in the above configuration (13), the pre-load has a magnitude of at least a thrust force in an axial direction of the rollers applied to the side plate from the rollers.
   With the above configuration (14), it is possible to prevent backlash between the rotary section and the stationary section, and to prevent the relative position between the rotary section and the stationary section from being misaligned by the thrust force of the roller caused by skewing of the roller.
(15) A wind turbine power generating apparatus according to at least one embodiment of the present invention comprises: a wind turbine rotor including at least one blade; a rotation shaft coupled to the wind turbine rotor; a hydraulic pump configured to be driven by the rotation shaft to produce pressurized oil; a hydraulic motor configured to be driven by the pressurized oil; and a generator configured to be driven by the hydraulic motor. At least one of the hydraulic pump or the hydraulic motor is the hydraulic machine of radial-piston type according to any one of the above (1) to (14).

With the above wind turbine power generating apparatus (15), at least one of the hydraulic pump or the hydraulic motor comprises the hydraulic machine of radial-piston type described above, which makes is possible to suppress wear of components, and to operate the at least one of the hydraulic pump or the hydraulic motor smoothly. Further, it contributes to the improvement of the durability of the at least one of the hydraulic pump or the hydraulic motor, which enables smooth operation of the wind turbine power generating apparatus.

According to at least some embodiments of the present invention, addressing the wear also taking account of deformation of the resin portion during operation of the hydraulic machine of radial-piston type makes it possible to securely suppress a decrease in the lifetime of the hydraulic machine of radial-piston type, the decrease being caused by wear due to contact between the roller and the side plate.

### BRIEF DESCRIPTION OF DRAWINGS

FIG. 1 is a diagram of a wind turbine power generating apparatus according to one embodiment.
FIG. 2 is a schematic cross-sectional view of a hydraulic machine of radial-piston type according to one embodiment.
FIG. 3 is a side view of a cam, a roller, and the peripheral structure thereof according to one embodiment.
FIG. 4 is a perspective view of a plurality of pistons arranged in a state of contacting a cam and a cam surface according to one embodiment.
FIG. 5 is a partial enlarged view of the hydraulic machine of radial-piston type illustrated in FIG. 2.
FIG. 6 is a partial enlarged view of the cam and the roller according to one embodiment (an enlarged view of section F in FIG. 5).
FIG. 7 is a partial enlarged view of the cam and the roller according to another embodiment.
FIG. 8 is a diagram for describing a side plate according to one embodiment.
FIG. 9A is a side view of a configuration of a side plate according to one embodiment.
FIG. 9B is a cross-sectional view of the side plate illustrated in FIG. 9A, taken along line A-A.
FIG. 10 is a side view of a configuration of a side plate according to another embodiment.

### DETAILED DESCRIPTION

Embodiments of the present invention will now be described with reference to the accompanying drawings. It is intended, however, that unless particularly specified, dimensions, materials, shapes, relative positions and the like of components described in the embodiments shall be interpreted as illustrative only and not intended to limit the scope of the present invention unless particularly specified.

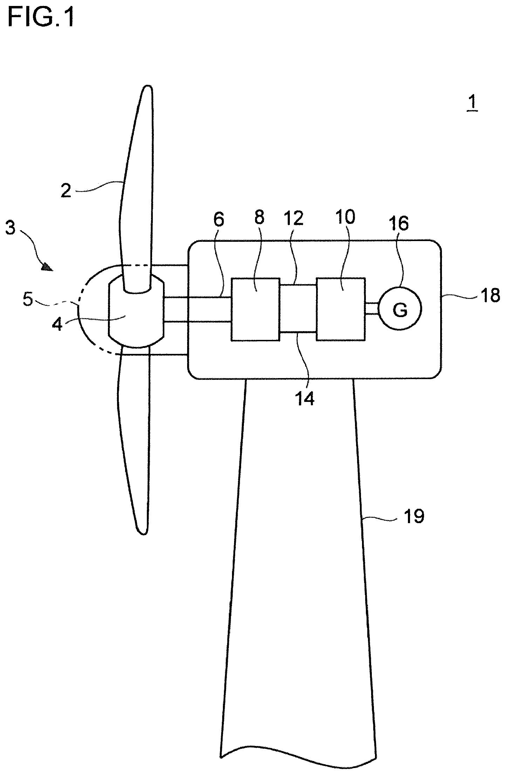

Firstly, with reference to FIG. 1, the overall configuration of a wind turbine power generating apparatus 1 according to some embodiments will be described. FIG. 1 is a diagram illustrating the wind turbine power generating apparatus 1 according to one embodiment.

In some embodiments, the wind turbine power generating apparatus 1 includes a wind turbine rotor 3 including at least one blade 2 and a rotation shaft 6 coupled to the wind turbine rotor 3, as illustrated in FIG. 1 for instance. Specifically, the wind turbine rotor 3 includes the at least one blade 2 and a hub 4. The hub 4 may be covered with a hub cover 5.

Further, the wind turbine power generating apparatus 1 includes a hydraulic pump 8 configured to be driven by the rotation shaft 6 to produce pressurized oil, a hydraulic motor 10 configured to be driven by the pressurized oil, and a generator 16 configured to be driven by the hydraulic motor 10.

Specifically, an outlet of the hydraulic pump 8 is connected to an inlet of the hydraulic motor 10 via the high-pressure oil line 12, and an inlet of the hydraulic pump 8 is connected to an outlet of the hydraulic motor 10 via the low-pressure oil line 14. The hydraulic pump 8 is driven by the rotation shaft 6 to pressurize the working oil, thereby producing high-pressure working oil (pressurized oil). The pressurized oil produced by the hydraulic pump 8 is supplied to the hydraulic motor 10 via the high-pressure oil line 12, and drives the hydraulic motor 10. The low-pressure working oil having performed work in the hydraulic motor 10 is returned again to the hydraulic pump 8 via the low-pressure oil line 14 disposed between the outlet of the hydraulic motor 10 and the inlet of the hydraulic pump 8.

The generator 16 is connected to the hydraulic motor 10. In one embodiment, the generator 16 is a synchronous generator connected to a utility grid and driven by the hydraulic motor 10.

At least a part of the rotation shaft 6 is covered by a nacelle 18 disposed on a tower 19. In one embodiment, the hydraulic pump 8, the hydraulic motor 10, and the generator 16 are disposed inside the nacelle 18.

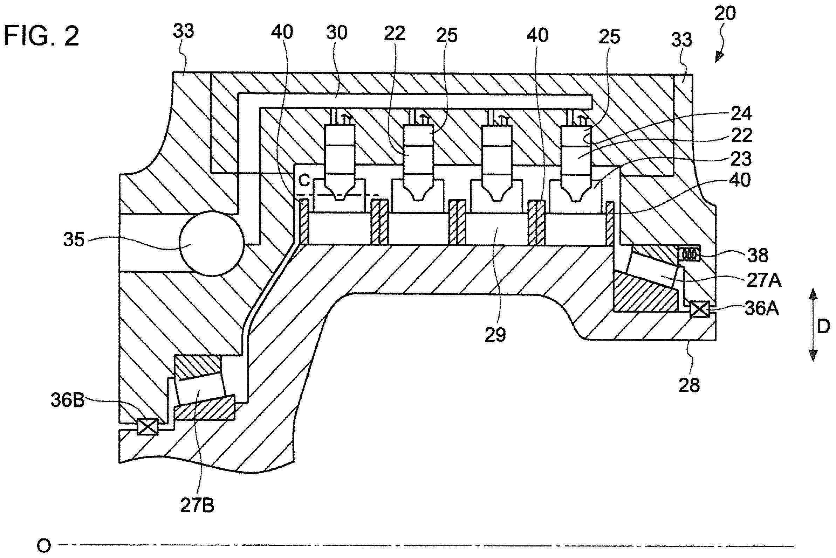

In some embodiments, at least one of the above described hydraulic pump 8 or hydraulic motor 10 is a hydraulic machine of radial-piston type 20 (see FIG. 2) described below.

FIG. 2 is a schematic cross-sectional view of the hydraulic machine of radial-piston type 20 according to one embodiment.

In some embodiments, the hydraulic machine of radial-piston type (hereinafter, referred to as a hydraulic machine) 20 includes a plurality of pistons 21, a plurality of rollers 22, a plurality of cylinders 24, a cam 29, and side plates 40, as illustrated in FIG. 2 as an example.

Each of the plurality of pistons 21 is disposed along the radial direction D of the hydraulic machine 20. The plurality of pistons 21 may be arranged in a radial fashion, centered at the center axis O of the hydraulic machine 20. Each of the plurality of rollers 22 is disposed rotatably on corresponding one of the plurality of pistons 21. Specifically, each of the pistons 21 supports the roller 22 with a support portion 23 so that the roller 22 is rotatable about the rotational center C of the roller 22.

The plurality of cylinders 24 is configured to guide the respective pistons 21. Specifically, each of the cylinders 24 is configured such that corresponding one of the pistons 21 slides inside the cylinder 24 reciprocably. Further, the plurality of cylinders 24 may be disposed in a cylinder block 26.

The cam 29 is configured to contact the plurality of rollers 22, and to be rotatable about the center axis O of the hydraulic machine 20.

The side plates 40 will be described later.

Each piston 21 is configured to be guided by corresponding one of the cylinders 24 to reciprocate along the radial direction D of the hydraulic machine 20 in accordance with the cyclic pressure change between a high pressure and a low pressure of a hydraulic chamber 25 formed by the piston 21 and the cylinder 24. Specifically, when each piston 21 reciprocates in the cylinder 24, the volume of the hydraulic chamber 25 formed by the piston 21 and the cylinder 24 changes cyclically. The mode of motion is converted between such reciprocating motion of the piston 21 accompanied by the cyclic volume change of the hydraulic chamber 25 and the rotational motion of the cam 29.

For instance, in a case where the hydraulic machine 20 is a hydraulic pump, the rotational motion of the cam 29 rotating with the rotation shaft 28 of the hydraulic machine 20 is converted into the reciprocating motion of the piston 21, so that the cyclic volume change of the hydraulic chamber 25 takes place and high-pressure working oil (pressurized oil) is produced in the hydraulic chamber 25. In contrast, in a case where the hydraulic machine 20 is a hydraulic motor, pressurized oil is introduced into the hydraulic chamber 25 to cause reciprocating motion of the piston 21, and the reciprocating motion is converted into the rotational motion of the cam 29, so that the rotation shaft 28 of the hydraulic machine 20 rotates with the cam 29. In a case where the hydraulic machine 20 is the hydraulic pump 8, the rotation shaft 28 may be a pump shaft configured to rotate with the rotation shaft 6 (see FIG. 1) of the wind turbine power generating apparatus 1.

In this way, as a result of the function of the cam 29, energy is converted between the rotational energy (mechanical energy) of the rotation shaft 28 of the hydraulic machine 20 and the fluid energy of the working oil, so that the hydraulic machine 20 performs the predetermined function as a hydraulic pump or a hydraulic motor.

In some embodiments, at least one inner oil channel 30 communicating with a plurality of hydraulic chambers 25 is formed in the cylinder block 26. Further, in the direction of the center axis O of the hydraulic machine 20, annular end plates 33, 34 are disposed on either side of the cylinder block 26. Specifically, one end plate 33 is disposed remote from the wind turbine rotor 3, and the other end plate 34 on the opposite side of the cylinder block 26 is disposed adjacent to the wind turbine rotor 3.

In one embodiment, a plurality of inner oil channels 30 is disposed along the center axis O of the hydraulic machine 20, and annular collecting channel 35 communicating with each of the plurality of inner oil channels 30 is formed inside the end plate 34. The annular collecting channel 35 inside the end plate 34 is connected to an outside tube (not illustrated). As described above, each of the hydraulic chambers 25 is in communication with the outside tube via the inner oil channel 30 and the annular collecting channel 35. FIG. 2 illustrates only one inner oil channel 30 and one annular collective channel 35 as an example.

In the present embodiment, the hydraulic machine 20 has a section including the cylinder block 26, referred to as a stationary section, and a section including the cam 29 and rotating about the center axis O with the cam 29, which is a section rotating about the center axis O relative to the stationary section, referred to as a rotary section.

In one embodiment, a pair of bearings 27A, 27B that support the rotary section of the hydraulic machine 20 to the stationary section of the hydraulic machine 20 rotatably is disposed between the stationary section and the rotary section, at the opposite end parts of the hydraulic machine 20. Specifically, the pair of bearings 27A, 27B is disposed between the end plates 33, 34 and the rotation shaft 28, respectively. In this case, in the direction of the center axis O of the hydraulic machine 20, the pair of bearings 27A, 27B is disposed on the opposite sides of the cam 29. One bearing 27A is disposed remote from the wind turbine rotor 3, and the other bearing 27B is disposed adjacent to the wind turbine rotor 3. Further, at least one of the pair of bearings 27A, 27B may be a tapered bearing configured to receive a load in a thrust direction (direction of the center axis O of the rotation shaft 28). In this way, the end plates 33, 34 are capable of maintaining a stationary state without being affected by the rotational motion of the rotation shaft 28.

In one embodiment, the cam 29 is configured to rotate with the rotation shaft 28. The cam 29 may be a ring cam that has a wavy-shaped cross section, and includes a cam surface 29a which contacts the rollers 22 disposed on the pistons 21. Further, a plurality of cams 29 may be disposed in at least two rows in the direction of the center axis O of the hydraulic machine 20 with the pistons 21 and the rollers 22 arranged in accordance with the rows of the cams 29. In this way, when the number of the pistons is constant, the more rows of cams 29 and corresponding pistons 21 and rollers 22 are provided, the fewer pistons are disposed per each row. Thus, it is possible to reduce the diameter of the cams 29. As a result, it is possible to make the hydraulic machine 20 compact in the radial direction D. Further, with the phase of the cams 29 in the circumferential direction varied among the plurality of rows of the cams 29, it is possible to reduce oscillation of the hydraulic machine 20 upon driving.

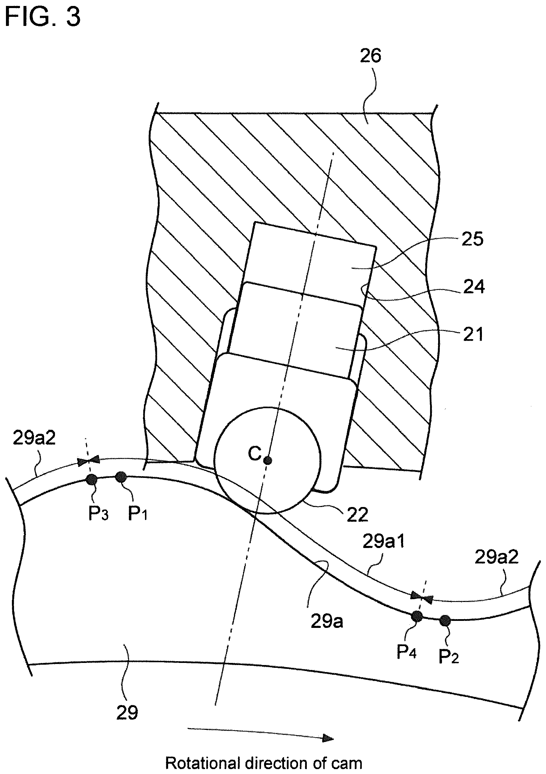

Now, with reference to FIG. 3, the surface of the cam 29 (cam surface 29a) will be described. FIG. 3 is a side view of the cam 29, the roller 22, and the peripheral structure thereof according to one embodiment. The cam 29 has a working surface 29a₁ which the roller 22 contacts when the pressure of the hydraulic chamber 25 is high and a breathing surface 29a₂ which the roller 22 contacts when the pressure of the hydraulic chamber 25 is low.

In a case where the hydraulic machine 20 is the hydraulic pump 8 (see FIG. 2), when the roller 22 is on the working surface 29a₁ of the cam surface 29a, the piston 21 is basically moving from the bottom dead center to the top dead center, and the pressure of the working oil in the hydraulic chamber 25 is high. In contrast, when the roller 22 is on the breathing surface 29a₂ of the cam surface 29a, the piston 21 is basically moving from the top dead center to the bottom dead center, and the pressure of the working oil in the hydraulic chamber 25 is low. In a case where the hydraulic machine 20 is a hydraulic pump, the working surface 29a₁ is a downstream region of a top point P₁ of the cam surface 29a in a cam rotational direction, and the breathing surface 29a₂ is an upstream region of the top point P₁ of the cam surface 29a in the cam rotational basically, as illustrated in FIG. 3. For instance, the working surface 29a₁ is a region between the top point P₁ of the cam surface 29a and a bottom point P₂ on the downstream side in the cam rotational direction, and the breathing surface 29a₂ is a region between the top point P₁ of the cam surface 29a and a bottom point P₂ on the upstream side in the cam rotational direction. The top point P₁ of the cam surface 29a is a position on the cam surface 29a farthest from the center axis O (see FIG. 2) of the hydraulic machine 20 in the radial direction, which is the maximum diameter point. Further, the bottom point P₂ is a position on the cam surface 29a closest to the center axis O (see FIG. 2) of the hydraulic machine 20 in the radial direction D, which is the minimum diameter point.

Further, in a case where the hydraulic machine 20 is the hydraulic motor 10 (see FIG. 2), when the roller 22 is on the working surface 29a₁ of the cam surface 29a, the piston 21 is basically moving from the top dead center to the bottom dead center, and the pressure of the working oil in the hydraulic chamber 25 is high. In contrast, when the roller 22 is on the breathing surface 29a₂ of the cam surface 29a, the piston 21 is basically moving from the bottom dead center to the top dead center, and the pressure of the working oil in the hydraulic chamber 25 is low. In a case where the hydraulic machine 20 is a hydraulic motor, the working surface 29a₁ is an upstream region of the top point P₁ of the cam surface 29a in the cam rotational direction, and the breathing surface 29a₂ is a downstream region of the top point P₁ of the cam surface 29a in the cam rotational direction, basically. For instance, the working surface 29a₁ is a region between the top point P₁ of the cam surface 29a and a bottom point P₂ on the upstream side in the cam rotational direction, and the breathing surface 29a₂ is a region between the top point P₁ of the cam surface 29a and a bottom point P₂ on the downstream side in the cam rotational direction.

However, the positions of the transition points P₃, P₄ between the working surface 29a₁ and the breathing surface 29a₂ may vary depending on, for instance, the inclination angle of the center axis of the cylinder with respect to the radial direction D, the opening-closing timing of the low-pressure valve and the high-pressure valve disposed on each oil channel communicating with the hydraulic chamber 25, or the shape of the cam 29 and the rollers 22.

Typically, the transition points P₃ and P₄ between the working surface 29a₁ and the breathing surface 29a₂ are set on the positions (top point P₁ and the bottom point P₂) on the cam surface 29a corresponding to the top dead center and the bottom dead center of the piston 21, or in the vicinity thereof. In one embodiment, in a case where the hydraulic machine 20 is a hydraulic pump, as illustrated in FIG. 3, the transition point (starting point) P₄ of the working surface 29a₁ is set at a position slightly offset toward the upstream side in the cam rotational direction from the position (bottom point P₂) on the cam surface 29a corresponding to the bottom dead center of the piston 21, and the transition point (terminating point) P₃ of the working surface 29a₁ is set at a position slightly offset toward the upstream side in the cam rotational direction from the position (top point P₁) on the cam surface 29a corresponding to the top dead center of the piston 21.

In the hydraulic machine of radial-piston type 20 having the above configuration, the roller 22 may be displaced in the axial direction of the roller 22 (width direction of the roller) due to various causes such as a side force applied from the cam 29. For instance, the manufacture tolerance, slide between the cam 29 and the roller 22, structural deformation, or oscillation may bring about skewing, which is rotation of the roller 22 about the axis of the cylinder 24. When a force is applied from the cam surface 29a while the roller 22 is skewing, a load in a thrust direction (hereinafter, referred to as a thrust force) occurs on the roller, and the roller 22 slides sideways in the thrust direction (in the direction of the rotational center C of the roller 22) to bring about displacement of the roller in the axial direction. In view of this, the hydraulic machine of radial-piston type 20 according to the present embodiment includes the side plate 40 disposed on the rotary section of the hydraulic machine 20 to prevent the displacement of the roller 22 in the axial direction.

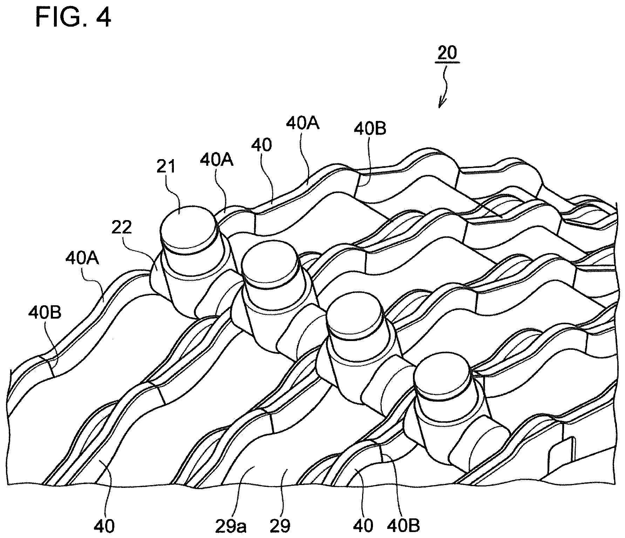

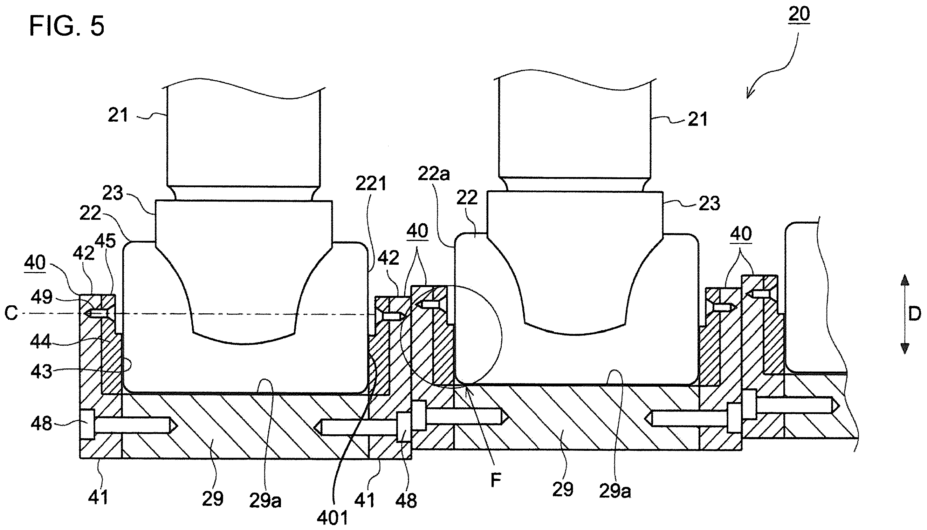

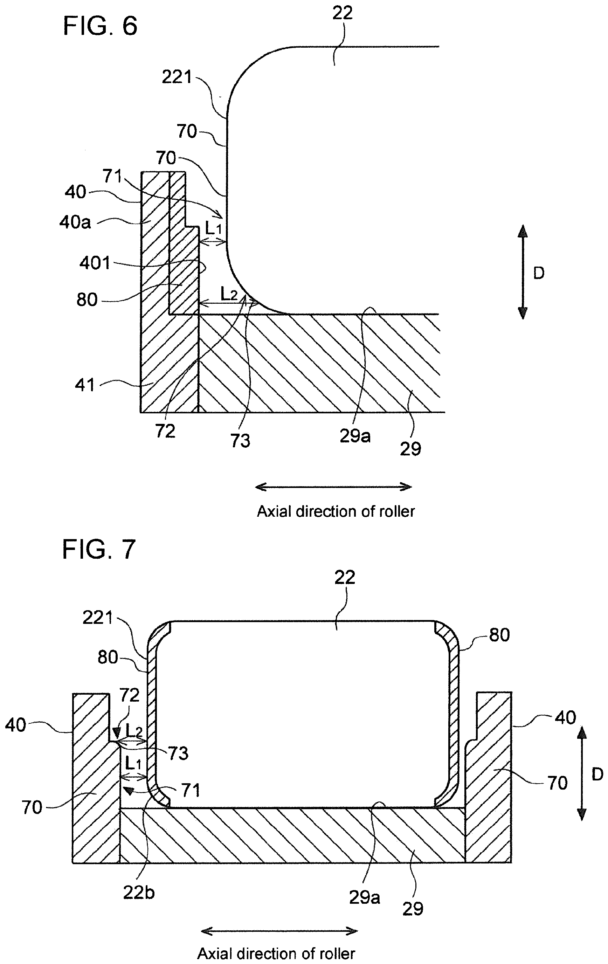

Next, with reference to FIGs. 4 to 7, the side plate 40 and the peripheral structure thereof will be described specifically. FIG. 4 is a perspective view of the plurality of pistons 21 arranged in a state of contacting the cam 29 and the cam surface 29a according to one embodiment. FIG. 5 is a partial enlarged view of the hydraulic machine of radial-piston type illustrated in FIG. 2. FIG. 6 is a partial enlarged view of the cam 29 and the roller 22 according to one embodiment (an enlarged view of section F in FIG. 5). FIG. 7 is a partial enlarged view of the cam 29 and the roller 22 according to another embodiment.

FIGs. 4 to 6 illustrate an embodiment in which a resin portion 80 is disposed on a side of the side plate 40 as an example, while FIG. 7 illustrates another embodiment in which a resin portion 80 is disposed on a side of the roller 22 as an example.

As illustrated in FIGs. 4 and 5, in some embodiments, the side plate 40 is mounted to the rotary section of the hydraulic machine 20 and extends along the radial direction D from the side of the cam 29 toward the side of the piston 21. The side plate 40 is configured to rotate with the rotary section relatively to the stationary section. As described above, the rotary section of the hydraulic machine 20 is a section that includes the cam 29 and rotates about the center axis O (see FIG. 2) with the cam 29.

As illustrated in FIGs. 6 and 7, one of the roller 22 or the side plate 40 includes a resin portion 80 forming the first surface, which is one of a roller end surface 221 or a side plate surface 401 facing the roller end surface 221.

Further, the other one of the roller 22 or the side plate 40 includes a metal portion 70 forming the second surface, which is the other one of the roller end surface 221 or the side plate surface 401.

The metal portion 70 includes the first region 71 at which a distance L between the second surface formed by the metal portion 70 and the first surface formed by the resin portion 80 along the axial direction of the roller 22 is the minimum distance L₁, and the second region 72 having a distance L₂ larger than the distance L₁ of the first region 71 and forming an edge portion 73 of the first region 71.

Further, the second region 72 forming the edge portion 73 of the metal portion 70 has a surface roughness of at most 0.8 µmRa.

In the present embodiment, "surface roughness" may be the arithmetic surface roughness (JIS B 0601, corresponding to ISO4287:1997).

According to the above hydraulic machine of radial-piston type 20, one of the roller 22 or the side plate 40 includes the resin portion 80 forming the first surface, which is one of the roller end surface 221 or the side plate surface 401 facing the roller end surface 221. Further, the other one of the roller 22 or the side plate 40 includes the metal portion 70 forming the second surface, which is the other one of the roller end surface 221 or the side plate surface 401. Thus, during operation of the hydraulic machine of radial-piston type 20, the roller 22 and the side plate 40 contact each other via the metal portion 70 and the resin portion 80. Thus, the maximum surface pressure generated at the boundary between the contact surfaces (the resin portion 80 in particular) is lower than that between metals contacting each other, which makes it possible to suppress wear.

Further, in the above configuration, the metal portion 70 includes the first region 71 at which the distance L between the second surface formed of the metal portion 70 and the first surface formed of the resin portion 80 along the axial direction of the roller 22 is the minimum, and the second region 72 having a distance L larger than that of the first region 71 and forming an edge portion 73 of the first region 71. With this configuration, when the hydraulic machine of radial-piston type 20 is stopped, the metal portion 70 and the resin portion 80 are not in contact at the second region 72 because the above thrust force is not applied, even in a state where the metal portion 70 and the resin portion 80 are in contact at the first region 71.

However, in a case where one of the roller end surface 221 or the side plate surface 401 is formed by the resin portion 80, the above rotation (skewing) of the roller about the axis of the cylinder with the piston may deform the resin portion 80 due to contact with the metal portion 70 upon operation of the hydraulic machine of radial-piston type 20. The above thrust force increases a part at which the metal portion 70 and the resin portion 80 are in contact at the second region 72 at which there is no contact while the hydraulic machine of radial-piston type 20 is stopped, and increases a surface pressure at the contacting part in the second region 72, which may cause wear on the contact surfaces.

In view of this, with the above configuration, the second region 72 forming the edge portion 73 of the metal portion 70 has a surface roughness of at most 0.8 µmRa.

In this way, even when the above thrust force is applied during operation of the hydraulic machine of radial-piston type 20, it is possible to suppress wear of the contact surfaces of the metal portion 70 and the resin portion 80 at the edge portion 73.

As described above, addressing the wear taking account of the above thrust force in operation of the hydraulic machine of radial-piston type 20 makes it possible to securely suppress a decrease in the lifetime of the hydraulic machine of radial-piston type 20 due to wear caused by contact between the roller 22 and the side plate 40.

In the above configuration, the surface roughness of the second region 72 may be at most 0.4 µmRa. Alternatively, the surface roughness of the second region 72 may be at most 0.2 µmRa.

With this configuration, even when the metal portion 70 and the resin portion 80 are in contact at the second region 72 due to the above thrust force during operation of the hydraulic machine of radial-piston type 20, it is possible to suppress wear of the contact surfaces effectively.

In the embodiment illustrated in FIG. 6, the side plate 40 includes the resin portion 80 forming the side plate surface 401, and the roller 22 includes the metal portion 70 forming the roller end surface 221. Specifically, the resin portion 80 is disposed so as to form the side plate surface 401 facing the roller end surface 221. For instance, the side plate 40 includes a side plate body 40a formed of a metal material having a high stiffness and the resin portion 80 of a sheet shape disposed on a surface of the side plate body 40a that faces the roller end surface 221. The side plate body 40a is formed in annular shape centered at the center axis O (see FIG. 2) along the cam surface 29a. The root end portion 41 of the side plate body 40a is fixed to the cam 29 by a bolt 48 illustrated in FIG. 5. The resin portion 80 may be mounted to the side plate body 40a by a bolt 49 illustrated in FIG. 5. Further, the resin portion 80 may extend outwardly from the position of the cam surface 29a in the radial direction D.

Further, the metal portion 70 includes a circular flat surface being the first region 71 orthogonal to the axial direction (direction along the rotational center C) of the roller 22, and a curved cross-sectional surface being the second region 72 forming the outer circumferential edge of the circular flat surface. For instance, the edge portion 73 of the roller end surface 221 is formed in an R shape, and the edge portion 73 of the R shape is the second region 72, and the center part of the roller end surface 221 parallel to the side plate surface 401 is the first region 71. In this case, the curved cross-sectional surface of the metal portion 70 has the surface roughness of at most 0.8 µmRa.

With the above configuration, the side plate surface 401 is formed of the resin portion 80, and the roller end surface 221 is formed of the metal portion 70, which facilitates attachment of the resin portion 80. Specifically, even in a case where a plurality of rollers 22 (pistons 21) is provided, there is only one cam 29 to which the resin portion 80 is to be installed (there is one pair of the side plates 40). Thus, it is possible to simplify the attachment work of the resin portion 80.

Further, the metal portion 70 includes the circular flat surface being the first region 71 orthogonal to the axial direction of the roller 22, and the curved cross-sectional surface being the second region 72 forming the outer circumferential edge of the circular flat surface. As described above, since the outer circumferential edge of the roller end surface 221 is formed of a curved cross-sectional surface, it is possible to improve the handling performance of the roller 22. Further, since the curved cross-sectional surface of the outer circumferential edge of the roller end surface 221 has a surface roughness of at most 0.8 µmRa, it is possible to suppress the wear of the contact surfaces of the metal portion (curved cross-sectional surface) 70 and the resin portion 80 securely.

In the embodiment illustrated in FIG. 7, the roller 22 includes the resin portion 80 forming the roller end surface 221, and the side plate 40 includes the metal portion 70 forming the side plate surface 401. Specifically, the resin portion 80 is disposed so as to form the roller end surface 221. For instance, the resin portion 80 may be disposed in a circular shape over the entire surface including the edge of the roller end surface 221. Alternatively, the resin portion 80 may be disposed in an annular shape only in a region that is the radially-outer portion the roller end surface 221 including the edge and that possibly contacts the side plate surface 401. The resin portion 80 may be disposed attachably and detachably to the roller end surface 221 so that the resin portion 80 can be replaced after being worn.

The metal portion 70 is disposed so as to form the side plate surface 401. For instance, the side plate 40 is formed of the metal portion 70, and the root end portion 41 of the side plate 40 is fixed to the cam 29 by a bolt.

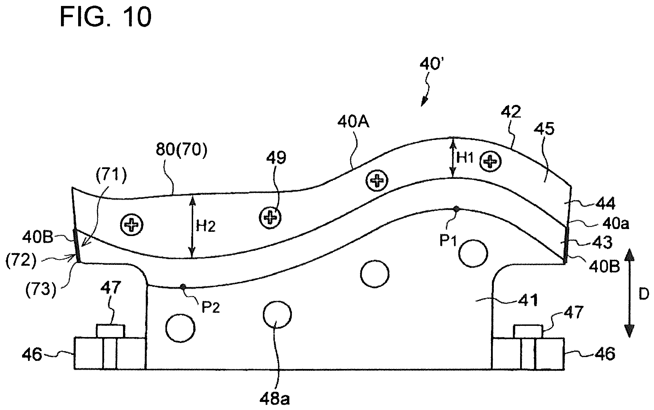

In one embodiment, the cam 29 has a structure divided into a plurality of sections, and the side plate 40 is divided into a plurality of sections 40A, 40B in accordance with the respective divided sections of the cam 29 (see FIGs. 4 and 10). Further, as illustrated in FIG. 7, the metal portion 70 includes a flat surface of the side plate 40 being the first region 71 orthogonal to the axial direction of the cam 29 (the axial direction of the roller 22), and the curved cross-sectional surface forming the second region 72. In this case, the second region 72 may be the edge portion 73 (joint 40B) existing between two flat surfaces of the adjacent sections 40A, 40B of the side plate 40 as illustrated in FIGs. 4 and 10. Alternatively, the second region 72 may be an end portion having an R shape of the side plate 40 protruding in the radial direction D toward the piston 21 (see FIG. 4) from the cam 29 as illustrated in FIG. 7.

Further, the curved cross-sectional surface of the edge portion 73 of the side plate surface 401 has a surface roughness of at most 0.8 µmRa.

In this way, during operation of the hydraulic machine of radial-piston type 20, it is possible to suppress wear of the resin portion 80 due to the edge portion 73 of the metal portion 70. Further, since the curved cross-sectional surface of the edge portion 73 of the side plate surface 401 has a surface roughness of at most 0.8 µmRa, it is possible to suppress the wear of the contact surfaces of the metal portion (curved cross-sectional surface) 70 and the resin portion 80 securely.

FIG. 10 is a side view of a configuration of a side plate 40' according to another embodiment (corresponding to the embodiment illustrated in FIG. 6). Specifically, the resin portion 80 is disposed on the side plate 40'. However, the reference numerals in brackets in FIG. 10 represent the configuration in a case where the metal portion 70 is disposed on the side plate 40 (corresponding to the embodiment illustrated in FIG. 7).

In the above configuration, the side plate surface 401 is formed of the metal portion 70, and the roller end surface 221 is formed of the resin portion 80. With this configuration, when the resin portion 80 is worn due to contact with the metal portion 70, it is also possible to replace only the resin portion 80 of the roller 22 having the roller end surface 221 that is worn among the plurality of rollers 22, which makes it easier to perform maintenance.

Further, the metal portion 70 includes a flat surface being the first region 71 orthogonal to the axial direction of the cam 29, and a curved cross-sectional surface being the second region 72 forming the edge portion 73 of the flat surface. In this way, during operation of the hydraulic machine 20, it is possible to suppress wear of the resin portion 80 due to the edge portion 73 of the metal portion 70. Further, since the curved cross-sectional surface of the edge portion 73 of the side plate surface 401 has a surface roughness of at most 0.8 µmRa, it is possible to suppress the wear of the contact surfaces of the metal portion (curved cross-sectional surface) 70 and the resin portion 80 securely.

More specifically, in a case where the side plate 40 has a structure divided in the circumferential direction as illustrated in FIGs. 4 and 10, i.e., in a case where the side plate 40 is formed of a plurality of sections 40A arranged in an annular shape, the second region 72 is formed at a position corresponding to the joint 40B between adjacent sections 40A. Each section 40A has edges formed in an R shape so as to improve the handling performance, in case of which the first region 71 and the second region 72 of the metal portion 70 each extend along the radial direction D. Further, the second region 72 has a surface roughness of at most 0.8 µmRa.

In some of the above embodiments, the resin portion 80 may be formed of wear-resistant resin containing at least one of PEEK, PPS, PA, POM, or PTFE.

As described above, using the above resin material having an excellent wear-resistant property makes it possible to suppress wear of the resin portion 80 more effectively.

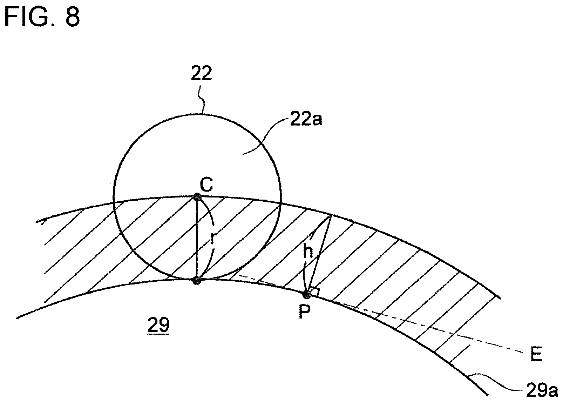

FIG. 8 is a diagram for describing the side plate 40 according to one embodiment.

In the illustrative embodiment illustrated in FIG. 8, the side plate 40 is configured to contact the end surface 22a of the roller 22 only in a region (shaded region in FIG. 8) surrounded by the cam surface 29a and the curve 28 separated from the cam surface 29a by a radius r of the roller 22 in at least a range, in the circumferential direction, of the hydraulic machine 20, the range corresponding to the working surface 29a₁ (see FIG. 3). In other words, the side plate 40 is configured such that the height h of the side plate 40 is at most the radius r of the roller 22 in a range, at least in the circumferential direction, of the hydraulic machine 20, the range corresponding to the working surface 29a₁ (see FIG. 3). It will be understood that the above configuration of the side plate 40 may be applied not only to the working surface 29a₁ but also to the breathing surface 29a₂. The height h of the side plate 40 is a length of the side plate 40 in a direction perpendicular to the tangent line E at a certain point P of the cam surface 29a.

Generally in the hydraulic machine 20, a load in a thrust direction (hereinafter, referred to as a thrust force) may be generated on the roller 22 due to skewing of the roller 22. The thrust force is normally greater on the working surface 29a₁ than on the breathing surface 29a₂ of the cam. Thus, in the above hydraulic machine 20, at least in the range, in the circumferential direction, of the hydraulic machine 20, the range corresponding to the working surface 29a₁, the side plate 40 is in contact with the end surface 22a of the roller 22 only in a region surrounded by the cam surface 29a and the curve 28 separated from the cam surface 29a by the radius r of the roller 22, which makes it possible to reduce the moment applied to the side plate 40 about the side plate attaching part as compared to a case where the end surface 22a of the roller 22 contacts the side plate 40 at the side closer to the piston 21 with respect to the region surrounded by the cam surface 29a and the curve 28. Thus, it is possible to suppress damage to the side plate 40 due to a thrust force of the roller and to improve the durability of the side plate.

Further, the side plate 40 may be configured to contact the end surface 22a of the roller 22 at such a position that a distance (height h of the side plate 40) in the radial direction from the cam surface 29a is at most 30% of the diameter of the roller 22. In this way, it is possible to suppress the moment applied to the side plate 40 even further, and to further improve the durability of the side plate 40.

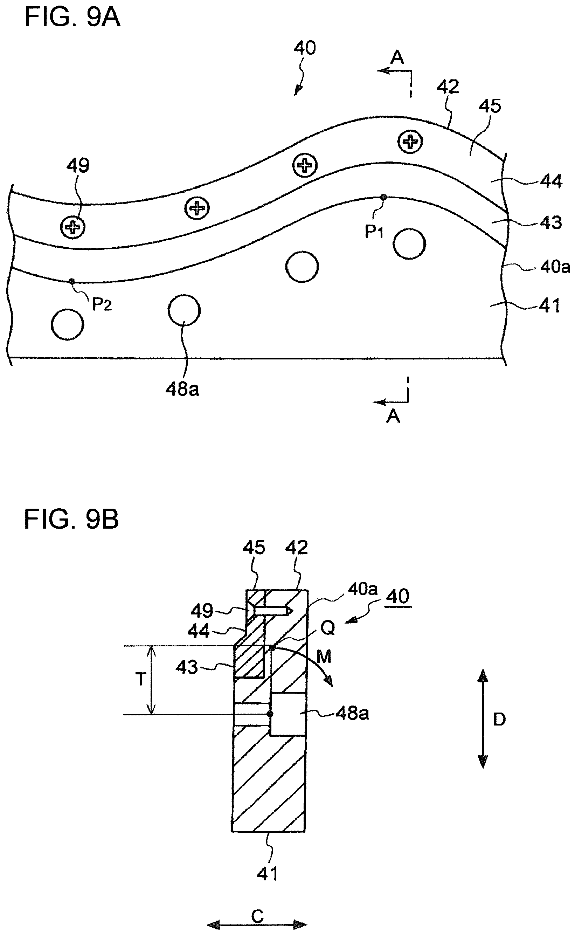

In a specific configuration example, as illustrated in FIGs. 9A, 9B, and 10, the side plate 40 includes a side plate body 40a having the root end portion 41 fastened to the end surface of the cam 29 and a tip end portion 42 protruding in the radial direction D toward the piston 21 from the cam 29, and a contact portion 43 disposed on the tip end portion of the side plate body 40a. Further, as illustrated in FIG. 5, the side plate 40 is configured such that the contact portion 43 contacts the end surface 22a of the roller 22 in a region at the side of the cam 29 with respect to the rotational center C of the roller 22 of the end surface 22a of the roller 22. A bolt hole 48a is formed on the root end portion 41 of the side plate 40, and the side plate 40 is mounted to the cam 29 fixedly by the bolt 48 inserted through the bolt hole 48a. As described above, with the root end portion 41 of the side plate body 40a mounted to the end surface of the cam 29 contacting the roller 22, it is possible to bring the side plate attaching part (bolt 48; see FIG. 5) to the load point Q of the side plate 40 receiving the thrust force from the end surface 22a of the roller 22. In other words, it is possible to shorten the distance T between the load point Q on the side plate 40 receiving the thrust force and the side plate attaching part (bolt 48; see FIG. 5). Thus, it is possible to further reduce the moment M (moment M at the load point Q) acting on the side plate 40 about the side plate attaching part. Further, since the side plate 40 is fastened to the end surface of the cam via the root end portion 41, it is possible to simplify the fastening structure of the side plate 40. Further, it is also possible to provide the cam 29 and the side plate 40 as an assembly, which makes it possible to improve the assembling performance of the cam 29 and the side plate 40.

In the above side plate 40, the contact portion 43 may be a resin member 45 having a wear-resistant property mounted to the tip end portion 42 of the side plate body 40a. In this way, it is possible to suppress wear of the contact portion 43 due to contact with the end surface 22a of the roller 22, which makes it possible to improve the durability of the side plate 40. Further, the side plate body 40a and the contact portion 43 may be formed of different materials. In this case, it is possible to reduce the material cost.

Further, in the above side plate 40, the contact portion 43 may be disposed at a position offset toward the root end portion 41, on the tip end portion 42 of the side plate body 40a. Specifically, as illustrated in FIGs. 9A, 9B, and 10, a stepped portion 44 is disposed in a region of the tip end portion 42 farthest from the cam 29, and the contact portion 43 is disposed in a region of the tip end portion 42 at the side of the root end portion 41 with respect to the stepped portion 44. The stepped portion 44 is recessed in a direction away from the cam surface 29a in the direction of the rotational center C of the roller 22, and configured so as not to contact the end surface 22a of the roller 22. At the stepped portion 44, the resin member 45 may be mounted to the side plate body 40a by the bolt 49. In this way, it is possible to prevent the head portion of the bolt 49 from contacting the end surface 22a of the roller 22, and to bring the position of the contact portion 43 even closer to the cam surface 29a, which makes it possible to reduce the moment M acting on the side plate 40 even further.

In the example illustrated in FIGs. 9A and 9B, the height of the stepped portion 44 of the side plate 40 is substantially constant in the circumferential direction of the hydraulic machine 20. In contrast, in the example illustrated in FIG. 10, from the perspective of the workability of attachment of the side plate 40, the height of the stepped portion 44 of the side plate 40 is varied between a region corresponding to the top point P₁ and a region corresponding to the bottom point P₂ of the cam surface 29a. Specifically, the height H₂ of the stepped portion of the side plate 40 in the region corresponding to the bottom point P₂ of the cam surface 29a is higher than the height H₁ of the stepped portion of the side plate 40 in the region corresponding to the top point P₁ of the cam surface 29a. In this way, it is possible to facilitate the fastening work of the bolt 49. Also in this case, the height of the contact portion 43 is substantially constant in the circumferential direction of the hydraulic machine 20.

Further, the cam 29 and the side plate 40 are each divided into a plurality of sections 40A in the circumferential direction of the center axis O, and the number of sections of the side plate 40 may be the number of sections of the cam 29 or less. In a case where the side plate 40 has a divided structure, as illustrated in FIG. 10 for instance, each section of each side plate 40 is attached to the section 40A of the cam 29 using bolts 47 via an attaching part 46. With the cam 29 and the side plate 40 having a divided structure as described above, it is possible to improve the manufacturability of the cam 29 and the side plate 40. Further, while the number of sections into which the cam 29 is to be divided is often determined from the perspective of the handling performance in manufacture, there are fewer requirements for the number of sections of the side plate 40, and thus the design flexibility is high for the divided structure of the side plate 40. Therefore, with the number of sections of the side plate 40 being not more than the number of sections of the cam 29, the side plate 40 only needs to be mounted to one cam 29 or to a cam assembly in which a plurality of cams 29 are assembled, upon assembly of the hydraulic machine 20. Thus, it is possible to improve the assembly performance of the cam 29 and the side plate 40.

In one embodiment, in a case where the pair of bearings 27A, 27B that the hydraulic machine 20 includes is a pair of tapered bearings as illustrated in FIG. 2, at least one bearing 27A may include a spring 38 that serves as a pre-compression portion for applying a pre-load in a direction toward the center of the hydraulic machine 20. For instance, the spring 38 is disposed on the bearing 27A disposed remote from the wind turbine rotor 3. In this way, it is possible to maintain the relative position of the rotary section and the stationary section appropriately.

In this case, the pre-load applied by the spring 38 may be as great as or greater than the thrust force in the axial direction of the roller applied to the side plate 40 from the roller 22. In this way, it is possible to prevent backlash between the rotary section and the stationary section, and to prevent the relative position between the rotary section and the stationary section from being displaced by the thrust force of the roller 22 caused by skewing of the roller 22.

As described above, according to the above at least some embodiments, addressing the wear also taking account of deformation of the resin portion 80 during operation of the hydraulic machine of radial-piston type 20 makes it possible to securely suppress a decrease in the lifetime of the radial-piston hydraulic machine 20 due to wear of contact between the roller 22 and the side plate 40.

Further, with the above hydraulic machine of radial-piston type 20 (see FIG. 2) applied to at least one of the hydraulic pump 8 or the hydraulic motor 10 of the wind turbine power generating apparatus 1 (see FIG. 1), it is possible to suppress wear of components, and to operate the at least one of the hydraulic pump 8 or the hydraulic motor 10 smoothly. Further, it contributes to the improvement of the durability of the at least one of the hydraulic pump 8 or the hydraulic motor 10, which enables smooth operation of the wind turbine power generating apparatus 1.

Embodiments of the present invention were described in detail above, but the present invention is not limited thereto, and various amendments and modifications may be implemented within a scope that does not depart from the present invention. For instance, some of the above embodiments may be combined.

For instance, while the wind turbine power generating apparatus 1 (see FIG. 1) is described as an example of application of the hydraulic machine of radial-piston type 20 (see FIG. 2) in the above embodiments, application of the hydraulic machine of radial-piston type 20 is not limited to the wind turbine power generating apparatus 1.

## Claims

1. A hydraulic machine of radial-piston type (20) comprising:
a plurality of pistons (21) disposed along a radial direction (D) of the hydraulic machine (20);
a plurality of cylinders (24) for guiding the respective pistons (21);
a plurality of rollers (22) disposed rotatably on the respective pistons (21) of the plurality of pistons at least one cam (29) configured to contact the plurality of rollers (22), the at least one cam (29) being rotatable about a center axis (O) of the hydraulic machine (20) **characterised in that**; a side plate (40) is mounted to a rotary section of the hydraulic machine (20), the rotary section including the at least one cam (29) and being configured to rotate about the center axis (O) with the at least one cam (29), and the side plate (40) extending along the radial direction (D) from the at least one cam (29) toward the pistons (21),
wherein either a) the side plate (40) includes a resin portion (80) forming a first surface which is a side plate surface (401) facing a roller end surface (221), and each roller of the plurality of rollers (22) includes a metal portion (70) forming a second surface which is the roller end surface (221), or b) each roller of the plurality of rollers (22) includes a resin portion (80) forming a first surface which is a roller end surface (221) facing a side plate surface (401), and the side plate (40) includes a metal portion (70) forming a second surface which is the side plate surface (401), wherein the metal portion (70) includes:
a first region (71) at which a distance along an axial direction of the rollers (22) between the second surface formed by the metal portion (70) and the first surface formed by the resin portion (80) is a minimum distance (L1), and
a second region (72) at which a distance along the axial direction of the rollers (22) between the second surface and the first surface is a distance (L2) which is larger than the minimum distance (L1) of the first region (71), the second region (72) forming an edge portion (73) of the first region (71), and
wherein the second region (72) forming the edge portion (73) of the metal portion (70) has a surface roughness of at most 0.8 µm Ra.

2. The hydraulic machine of radial-piston type (20) according to claim 1, wherein the surface roughness of the second region (72) is at most 0.4 µm Ra.

3. The hydraulic machine of radial-piston type (20) according to claim 1 or 2, wherein the surface roughness of the second region (72) is at most 0.2 µm Ra.

4. The hydraulic machine of radial-piston type (20) according to any one of claims 1 to 3,
wherein the side plate (40) includes the resin portion (80) forming the side plate surface (401),
wherein each of the rollers (22) includes the metal portion (70) forming the roller end surface (221),
wherein the metal portion (70) includes a circular flat surface being the first region (71) orthogonal to the axial direction of the rollers (22) and a curved cross-sectional surface being the second region (72) forming an outer circumferential edge of the circular flat surface, and
wherein a curved cross-sectional surface has a surface roughness of at most 0.8 µm Ra.

5. The hydraulic machine of radial-piston type (20) according to any one of claims 1 to 3,
wherein each of the rollers (22) includes the resin portion (80) forming the roller end surface (221),
wherein the side plate (40) includes the metal portion (70) forming the side plate surface (401),
wherein the metal portion (70) includes a flat surface being the first region (71) orthogonal to an axial direction of the at least one cam (29) and a curved cross-sectional surface being the second region (72) forming an edge portion (73) of the flat surface, and
wherein the curved cross-sectional surface has a surface roughness of at most 0.8 µm Ra.

6. The hydraulic machine of radial-piston type (20) according to any one of claims 1 to 5,
wherein the resin portion (80) comprises a wear-resistant resin containing at least one of PEEK, PPS, PA, POM, or PTFE.

7. The hydraulic machine of radial-piston type (20) according to any one of claims 1 to 6,
wherein each of the plurality of pistons (21) is configured to reciprocate in accordance with a cyclic change, between a high pressure and a low pressure, of a pressure of a hydraulic chamber (25) formed by the piston (21) and corresponding one of the cylinders (24),
wherein the at least one cam (29) includes a working surface (29a₁) which the roller (22) contacts when a pressure of the hydraulic chamber (25) is a high pressure and a breathing surface (29a₂) which the roller (22) contacts when the pressure of the hydraulic chamber (25) is a low pressure, and
wherein the side plate (40) is configured to contact the roller end surface (221) only in a region surrounded by a cam surface (29a) and a curve separated from the cam surface (29a) by a radius of the roller (22) at least in a range, in a circumferential direction, of the hydraulic machine (20), the range corresponding to a working surface (29a₁).

8. The hydraulic machine of radial-piston type (20) according to claim 7,
wherein the side plate (40) includes
a side plate body (40a) having a root end portion (41) fastened to an end surface of the at least one cam (29) and a tip end portion (42) protruding from the at least one cam (29) toward the pistons (21) in the radial direction (D), and
a contact portion (43) mounted to the tip end portion (42) of the side plate body (40a), and
wherein the contact portion (43) is configured to contact the roller end surface (221) in a region of the roller end surface (221), the region being closer to the at least one cam (29) than a rotational center (C) of the roller (22).

9. The hydraulic machine of radial-piston type (20) according to any one of claims 1 to 8,
wherein the side plate (40) is configured to contact the roller end surface (221) at such a position that a distance in the radial direction (D) from a cam surface (29a) on which the rollers (22) roll is at most 30% of a diameter of each of the rollers (22).

10. The hydraulic machine of radial-piston type (20) according to any one of claims 1 to 9,
wherein the side plate (40) is joined to the end surface of the at least one cam (29) by a bolt (48).

11. The hydraulic machine of radial-piston type (20) according to any one of claims 1 to 10,
wherein each of the at least one cam (29) and the side plate (40) is divided into a plurality of sections (40A) in a circumferential direction of the center axis (O), and a number of the sections (40A) of the side plate (40) is not more than a number of the sections of the at least one cam (29).

12. The hydraulic machine of radial-piston type (20) according to any one of claims 1 to 11,
wherein the at least one cam (29) comprises a plurality of cams (29) arranged in at least two rows in a direction of the center axis (O), and
wherein the pistons (21) and the rollers (22) are arranged in accordance with the rows of the cams (29).

13. The hydraulic machine of radial-piston type (20) according to any one of claims 1 to 12, further comprising:
a cylinder block (26) in which the plurality of cylinders (24) for guiding the respective pistons (21) is formed;
a pair of tapered bearings (27A, 27B) for supporting the rotary section of the hydraulic machine (20) rotatably to a stationary section of the hydraulic machine (20), the stationary section including the cylinder block (26), and the pair of tapered bearings (27A, 27B) being disposed between the rotary section and the stationary section at opposite ends of the hydraulic machine (20); and
a pre-compression part (38) for applying a pre-load to at least one tapered bearing (27A, 27B) of the pair of tapered bearings (27A, 27B) in a direction toward a center of the hydraulic machine (20).

14. The hydraulic machine of radial-piston type (20) according to claim 13,
wherein the pre-load has a magnitude of at least a thrust force in an axial direction of the rollers (22) applied to the side plate (40) from the rollers (22).

15. A wind turbine power generating apparatus (1) comprising:
a wind turbine rotor (3) including at least one blade (2) ;
a rotation shaft (6) coupled to the wind turbine rotor (3) ;
a hydraulic pump (8) configured to be driven by the rotation shaft (6) to produce pressurized oil;
a hydraulic motor (10) configured to be driven by the pressurized oil; and
a generator (16) configured to be driven by the hydraulic motor (10),
wherein at least one of the hydraulic pump (8) or the hydraulic motor (10) is the hydraulic machine of radial-piston type (20) according to any one of claims 1 to 14.

## Patentansprüche

1. Eine hydraulische Maschine vom Radialkolbentyp (20) umfassend:
eine Vielzahl von Kolben (21), die entlang einer Radialrichtung (D) der hydraulischen Maschine (20) angeordnet sind,
eine Vielzahl von Zylindern (24) zur Führung der jeweiligen Kolben (21),
eine Vielzahl von Wälzkörpern (22), die drehbar an den jeweiligen Kolben (21) der Vielzahl von Kolben angeordnet sind,
zumindest eine Steuerkurve (29), die ausgestaltet ist, um die Vielzahl von Wälzkörpern (22) zu kontaktieren, wobei die zumindest eine Steuerkurve (29) um eine Mittelachse (O) der hydraulischen Maschine (20) drehbar ist,
**gekennzeichnet durch**
eine Seitenplatte (40), die an einem drehbaren Abschnitt der hydraulischen Maschine (20) befestigt ist, wobei der drehbare Abschnitt die zumindest eine Steuerkurve (29) umfasst und ausgestaltet ist, um um die Mittelachse (O) mit der zumindest einen Steuerkurve (29) zu drehen, und wobei die Seitenplatte (40) sich entlang der Radialrichtung (D) von der zumindest einen Steuerkurve (29) zu den Kolben (21) erstreckt,
wobei entweder a) die Seitenplatte (40) einen Harzabschnitt (80) umfasst, der eine erste Oberfläche ausbildet, welche eine Seitenplattenoberfläche (401) ist, die einer Wälzkörperendoberfläche (221) gegenüberliegt, und jeder Wälzkörper der Vielzahl von Wälzkörpern (22) einen Metallabschnitt (40) umfasst, der eine zweite Oberfläche ausbildet, welche die Wälzkörperendoberfläche (221) ist, oder b) jeder Wälzkörper der Vielzahl von Wälzkörpern (22) einen Harzabschnitt (80) umfasst, der eine erste Oberfläche ausbildet, welche eine Wälzkörperendoberfläche (221) ist, die einer Seitenplattenoberfläche (401) gegenüberliegt, und die Seitenplatte (40) einen Metallabschnitt (70) umfasst, der eine zweite Oberfläche ausbildet, welche die Seitenplattenoberfläche (401) ist,
wobei der Metallabschnitt (70) umfasst:
einen ersten Bereich (71), an welchem ein Abstand entlang einer axialen Richtung der Wälzkörper (22) zwischen der zweiten Oberfläche, die durch den Metallabschnitt (70) ausgebildet ist, und der ersten Oberfläche, die durch den Harzabschnitt (80) ausgebildet ist, ein minimaler Abstand (L1) ist, und
einen zweiten Bereich (72), an welchem ein Abstand entlang der axialen Richtung der Wälzkörper (22) zwischen der zweiten Oberfläche und der ersten Oberfläche ein Abstand (L2) ist, welcher größer ist als der minimale Abstand (L1) des ersten Bereichs (71), wobei der zweite Bereich (72) einen Randabschnitt (73) des ersten Bereichs (71) ausbildet, und
wobei der zweite Bereich (72), der den Randabschnitt (73) des Metallabschnitts (70) ausbildet, eine Oberflächenrauheit von maximal 0,8 µm Ra hat.

2. Die hydraulische Maschine vom Radialkolbentyp (20) gemäß Anspruch 1, wobei die Oberflächenrauheit des zweiten Bereichs (72) maximal 0,4 µm Ra ist.

3. Die hydraulische Maschine vom Radialkolbentyp (20) gemäß Anspruch 1 oder 2, wobei die Oberflächenrauheit des zweiten Bereichs (72) maximal 0,2 µm Ra ist.

4. Die hydraulische Maschine vom Radialkolbentyp (20) gemäß einem der Ansprüche 1 bis 3,
wobei die Seitenplatte (40) den Harzabschnitt (80) umfasst, der die Seitenplattenoberfläche (401) ausbildet,
wobei jeder der Wälzlagerkörper (22) den Metallabschnitt (70) umfasst, der die Wälzkörperendoberfläche (221) ausbildet,
wobei der Metallabschnitt (70) eine kreisförmige flache Oberfläche, die der erste Bereich (71) ist, rechtwinklig zu der axialen Richtung der Wälzlagerkörper (22), und eine gekrümmte Querschnittsoberfläche, die der zweite Bereich (72) ist, der einen äußeren Umfangsrand der kreisförmigen flachen Oberfläche ausbildet, umfasst, und
wobei eine gekrümmte Querschnittsoberfläche eine Oberflächenrauheit von maximal 0,8 µm Ra hat.

5. Die hydraulische Maschine vom Radialkolbentyp (20) gemäß einem der Ansprüche 1 bis 3,
wobei jeder der Wälzkörper (22) den Harzabschnitt (80) umfasst, der die Wälzkörperendoberfläche (221) ausbildet,
wobei die Seitenplatte (40) den Metallabschnitt (70) umfasst, der die Seitenplattenoberfläche (401) ausbildet,
wobei der Metallabschnitt (70) eine flache Oberfläche, die der erste Bereich (71) ist, rechtwinklig zu einer axialen Richtung von der zumindest einen Steuerkurve (29), und eine gekrümmte Querschnittsoberfläche, die der zweite Bereich (72) ist, der einen Randabschitt (73) der flachen Oberfläche ausbildet, umfasst, und
wobei die gekrümmte Querschnittsoberfläche eine Oberflächenrauheit von maximal 0,8 µm Ra hat.

6. Die hydraulische Maschine vom Radialkolbentyp (20) gemäß einem der Ansprüche 1 bis 5,
wobei der Harzabschnitt (80) ein verschleißbeständiges Harz umfasst, das zumindest einen von PEEK, PPS, PA, POM oder PTFE enthält.

7. Die Hydraulikmaschine vom Radialkolbentyp (20) gemäß einem der Ansprüche 1 bis 6,
wobei jeder der Vielzahl von Kolben (21) ausgestaltet ist, um sich in Übereinstimmung mit einem zyklischen Wechsel zwischen einem Hochdruck und einem Niederdruck eines Drucks der hydraulischen Kammer (25), die durch den Kolben (21) und einem entsprechenden der Zylinder (24) gebildet ist, hin- und herzubewegen,
wobei die zumindest eine Steuerkurve (29) eine Arbeitsoberfläche (29a₁), welche der Wälzkörper (22) kontaktiert, wenn ein Druck der hydraulischen Kammer (25) ein Hochdruck ist, und eine Atemoberfläche (29a₂), welche der Wälzkörper (22) kontaktiert, wenn der Druck der hydraulischen Kammer (25) ein Niederdruck ist, umfasst, und
wobei die Seitenplatte (40) ausgestaltet ist, um die Wälzkörperendoberfläche (221) nur in einer Region zu kontaktieren, der von einer Steuerkurvenoberfläche (29a) und einer Bahn, die von der Steuerkurvenoberfläche (29a) um einen Radius des Wälzkörpers (22) zumindest in einem Bereich in einer Umfangsrichtung der hydraulischen Maschine (20) getrennt ist, wobei der Bereich einer Arbeitsoberfläche (29a1) entspricht, umgeben ist.

8. Die hydraulische Maschine vom Radialkolbentyp (20) gemäß Anspruch 7,
wobei die Seitenplatte (40)
einen Seitenplattenkörper (40a), der einen Fußendeabschnitt (41), der an einer Endoberfläche der zumindest einen Steuerkurve (29) befestigt ist, und einen Außenendabschnitt (42) aufweist, der von der zumindest einen Steuerkurve (29) zu den Kolben (21) in der Radialrichtung (D) hervorsteht, und
einen Kontaktabschnitt (43), der an dem Außenendabschnitt (42) des Seitenplattenkörpers (40a) befestigt ist, umfasst, und
wobei der Kontaktabschnitt (43) ausgestaltet ist, um die Wälzkörperendoberfläche (221) in einer Region der Wälzkörperendoberfläche (221) zu kontaktieren, wobei die Region näher bei der zumindest einen Steuerkurve (29) ist als eine Rotationsmitte (C) des Wälzkörpers (22).

9. Die hydraulische Maschine vom Radialkolbentyp (20) gemäß einem der Ansprüche 1 bis 8,
wobei die Seitenplatte (40) ausgestaltet ist, um die Wälzkörperendoberfläche (221) an solch einer Stelle zu kontaktieren, dass ein Abstand in der Radialrichtung (D) von einer Steuerkurvenoberfläche (29a), auf welcher die Wälzkörper (22) wälzen, höchstens 30% von einem Durchmesser eines jeden der Wälzkörper (22) ist.

10. Die hydraulische Maschine vom Radialkolbentyp (20) gemäß einem der Ansprüche 1 bis 9,
wobei die Seitenplatte (40) mit der Endoberfläche von der zumindest einen Steuerkurve (29) durch einen Bolzen (48) verbunden ist.

11. Die hydraulische Maschine vom Radialkolbentyp (20) gemäß einem der Ansprüche 1 bis 10,
wobei jede von der zumindest einen Steuerkurve (29) und die Seitenplatte (40) in eine Vielzahl von Bereichen (40A) in einer Umfangsrichtung der Mittelachse (O) unterteilt ist, und eine Anzahl der Bereiche (40A) der Seitenplatte (40) nicht größer als eine Anzahl der Bereiche der zumindest einen Steuerkurve (29) ist.

12. Die hydraulische Maschine vom Radialkolbentyp (20) gemäß einem der Ansprüche 1 bis 11,
wobei die zumindest eine Steuerkurve (29) eine Vielzahl von Steuerkurven (29) umfasst, die in zumindest zwei Reihen in einer Richtung der Mittelachse (O) angeordnet sind, und
wobei die Kolben (21) und die Wälzkörper (22) in Übereinstimmung mit den Reihen der Steuerkurven (29) angeordnet sind.

13. Die hydraulische Maschine vom Radialkolbentyp (20) gemäß einem der Ansprüche 1 bis 12, ferner umfassend:
einen Zylinderblock (26), in welchem die Vielzahl von Zylindern (24) zum Führen der jeweiligen Kolben (21) ausgebildet ist,
ein Paar Kegellager (27A,27B) zum Tragen des drehbaren Bereichs der hydraulischen Maschine (20) drehbar zu einem stationären Bereich der hydraulischen Maschine (20), wobei der stationäre Bereich den Zylinderblock (26) umfasst, und wobei das Paar Kegellager (27A,27B) zwischen dem drehbaren Bereich und dem stationären Bereich an gegenüberliegenden Enden der hydraulischen Maschine (20) angeordnet sind, und
einen Vorbelastungsabschnitt (38), um eine Vorbelastung auf zumindest ein Kegellager (27A,27B) des Paares der Kegellager (27A,27B) in einer Richtung zu einer Mitte der hydraulischen Maschine (20) aufzubringen.

14. Die hydraulische Maschine vom Radialkolbentyp (20) gemäß Anspruch 13,
wobei die Vorbelastung eine Größe von zumindest einer Schubkraft in einer axialen Richtung der Wälzkörper (22) hat, die von den Wälzkörpern (22) auf die Seitenplatte (40) einwirkt.

15. Eine Windturbinen-Stromerzeugungsvorrichtung (1) umfassend:
einen Windturbinenrotor (3), der zumindest einen Flügel (2) umfasst,
eine Rotationswelle (6), die mit dem Windturbinenrotor (3) gekoppelt ist,
eine Hydraulikpumpe (8), die ausgestaltet ist, um von der Rotationswelle (6) angetrieben zu werden, um Drucköl zu erzeugen,
einen Hydraulikmotor (10), der ausgestaltet ist, um von dem Drucköl angetrieben zu werden, und
einen Generator (16), der ausgestaltet ist, um von dem Hydraulikmotor (10) angetrieben zu werden,
wobei zumindest eine von der Hydraulikpumpe (8) oder dem Hydraulikmotor (10) die hydraulische Maschine vom Radialkolbentyp (20) gemäß einem der Ansprüche 1 bis 14 ist.

## Revendications

1. Machine hydraulique de type (20) à pistons radiaux, comprenant :
une pluralité de pistons (21) disposés le long d'une direction (D) radiale de la machine (20) hydraulique;
une pluralité de cylindres (24) pour guider les pistons (21) respectifs;
une pluralité de galets (22) disposés de manière à pouvoir tourner sur les pistons (21) respectifs de la pluralité de pistons;
au moins une came (29), configurée pour entrer en contact avec la pluralité de galets (22), la au moins une came (29) pouvant tourner autour d'un axe (O) central de la machine (20) hydraulique,
**caractérisée en ce que**;
une plaque (40) latérale montée sur une partie tournante de la machine (20) hydraulique, la partie tournante comprenant la au moins une came (29) et étant configurée pour tourner autour de l'axe (O) central, avec la au moins une came (29), et la plaque (40) latérale s'étendant le long de la direction (D) radiale à partir de la au moins une came (29) en direction des pistons (21),
dans laquelle, ou bien a) la plaque (40) latérale comprend une partie (80) en résine, formant une première surface, qui est une surface (401) de plaque latérale, faisant face à une surface (221) d'extrémité de galet, et chaque galet de la pluralité de galets (22) comprend une partie (70) métallique formant une seconde surface, qui est la surface (221) d'extrémité de galet, ou bien b) chaque galet de la pluralité de galets (22) comprend une partie (80) en résine, formant une première surface, qui est une surface (221) d'extrémité de galet, faisant face à une surface (401) de plaque latérale, et la plaque (40) latérale comprend une partie (70) métallique formant une second surface, qui est la surface (401) de plaque latérale,
dans laquelle la partie (70) métallique comprend :
une première région (71) où une distance, suivant une direction axiale des galets (22), entre la seconde surface formée par la partie (70) métallique et la première surface formée par la partie (80) en résine, est une distance (L1) minimum et
une deuxième région (72) où une distance, suivant la direction axiale des galets (22), entre la seconde surface et la première surface, est une distance (L2), qui est plus grande que la distance (L1) minimum de la première région (71), la deuxième région (72) formant une partie (73) de coin de la première région (71) et
dans laquelle la deuxième région (72), formant la partie (73) de coin de la partie (70) métallique, a une rugosité de surface d'au plus 0,8 µm Ra.

2. Machine hydraulique de type (20) à pistons radiaux suivant la revendication 1, dans laquelle la rugosité de surface de la deuxième région (72) est au plus de 0,4 µm Ra.

3. Machine hydraulique de type (20) à pistons radiaux suivant la revendication 1 ou 2, dans laquelle la rugosité de surface de la deuxième région (72) est au plus de 0,2 µm Ra.

4. Machine hydraulique de type (20) à pistons radiaux suivant l'une quelconque des revendications 1 à 3,
dans laquelle la plaque (40) latérale comprend la partie (80) en résine formant la surface (401) de plaque latérale,
dans laquelle chacun des galets (22) comprend la partie (70) métallique formant la surface (221) d'extrémité de galet,
dans laquelle la partie (70) métallique comprend une surface circulaire plane, qui est la première région (71), orthogonale à la direction axiale des galets (22), et une surface de section transversale incurvée, qui est la deuxième région (72), formant un bord circonférentiel extérieur de la surface circulaire plane et
dans laquelle une surface de section transversale incurvée a une rugosité de surface d'au plus 0,8 µm Ra.

5. Machine hydraulique de type (20) à pistons radiaux suivant l'une quelconque des revendications 1 à 3,
dans laquelle chacun des galets (22) comprend la partie (80) en résine formant la surface (221) d'extrémité de galet,
dans laquelle la plaque (40) latérale comprend la partie (70) métallique formant la surface (401) de plaque latérale,
dans laquelle la partie (70) métallique comprend une surface plane, qui est la première région (71), orthogonale à une direction axiale de la au moins une came (29) et une surface de section transversale incurvée, qui est la deuxième région (72), formant une partie (73) de bord de la surface plane et
dans laquelle la surface de section transversale incurvée a une rugosité de surface d'au plus 0,8 µm Ra.

6. Machine hydraulique de type (20) à pistons radiaux suivant l'une quelconque des revendications 1 à 5,
dans laquelle la partie (80) en résine comprend une résine résistante à l'usure contenant au moins l'une de PEEK, PPS, PA, POM ou PTFE.

7. Machine hydraulique de type (20) à pistons radiaux suivant l'une quelconque des revendications 1 à 6,
dans laquelle chacun de la pluralité de pistons (21) est configuré pour aller et venir suivant un changement cyclique, entre une pression haute et une pression basse, d'une pression d'une chambre (25) hydraulique formée par le piston (21) et l'un correspondant des cylindres (24),
dans laquelle la au moins une came (29) comprend une surface (29a₁) de travail, avec laquelle le galet (22) est en contact lorsque la pression de la chambre (25) hydraulique est une pression haute et une surface (29a₂) de respiration, avec laquelle le galet (22) est en contact lorsque la pression de la chambre (25) hydraulique est une pression basse et
dans laquelle la plaque (40) latérale est configurée pour être en contact avec la surface (221) d'extrémité de galet, seulement dans une région entourée par une surface (29a) de la came et dans une courbe distincte de la surface (29a) de la came d'un rayon du galet (22) au moins dans une plage, dans une direction circonférentielle, de la machine (20) hydraulique, la plage correspondant à une surface (29a₁) de travail.

8. Machine hydraulique de type (20) à pistons radiaux suivant la revendication 7,
dans laquelle la plaque (40) latérale comprend
un corps (40a) de plaque latérale, ayant une partie (41) d'extrémité de racine fixée à une surface d'extrémité de la au moins une came (29) et une partie (42) d'extrémité de pointe faisant saillie de la au moins une came (29), en direction des pistons (21), dans la direction (D) radiale et
une partie (43) de contact montée à la partie (42) d'extrémité de pointe du corps (40a) de plaque latérale et
dans laquelle la partie (43) de contact est configurée pour être en contact avec la surface (221) d'extrémité de galet dans une région de la surface (221) d'extrémité de galet, la région étant plus près de la au moins une came (29) qu'un centre (C) de rotation du galet (22).

9. Machine hydraulique de type (20) à pistons radiaux suivant l'une quelconque des revendications 1 à 8,
dans laquelle la plaque (40) latérale est configurée pour être en contact avec la surface (221) d'extrémité de galet, en une position telle qu'une distance, dans la direction (D) radiale, à la surface (29a) de la came sur laquelle roulent les galets (22), représente au plus 30% d'un diamètre de chacun des galets (22).

10. Machine hydraulique de type (20) à pistons radiaux suivant l'une quelconque des revendications 1 à 9,
dans laquelle la plaque (40) latérale est assemblée à la surface d'extrémité de la au moins une came (29) par un boulon (48) .

11. Machine hydraulique de type (20) à pistons radiaux suivant l'une quelconque des revendications 1 à 10,
dans laquelle chacune de la au moins une came (29) et de la plaque (40) latérale est subdivisée en une pluralité de parties (40A) dans une direction circonférentielle de l'axe (O) central et un nombre des parties (40A) de la plaque (40) latérale n'est pas supérieur à un nombre des parties de la au moins une came (29).

12. Machine hydraulique de type (20) à pistons radiaux suivant l'une quelconque des revendications 1 à 11,
dans laquelle la au moins une came (29) comprend une pluralité de cames (29) disposées suivant au moins deux rangées dans la direction de l'axe (O) central et
dans laquelle les pistons (21) et les galets (22) sont disposés suivant les rangées des cames (29).

13. Machine hydraulique de type (20) à pistons radiaux suivant l'une quelconque des revendications 1 à 12, comprenant en outre :
un bloc cylindre (26), dans lequel la pluralité de cylindres (24) de guidage des pistons (21) respectifs est formée;
une paire de roulements (27A, 27B) à rouleaux coniques pour supporter la partie tournante de la machine (20) hydraulique, de manière à ce qu'elle puisse tourner par rapport à une partie fixe de la machine (20) hydraulique, la partie fixe comprenant le bloc cylindre (26), et la paire de roulements (27A, 27B) à rouleaux coniques étant disposée entre la partie tournante et la partie fixe, à des extrémités opposées de la machine (20) hydraulique et
une partie (38) de pré-compression pour appliquer une pré-charge à au moins un roulement (27A, 27B) à rouleaux coniques de la paire de paliers (27A, 27B) coniques, dans une direction allant vers un centre de la machine (20) hydraulique.

14. Machine hydraulique de type (20) à pistons radiaux suivant la revendication 13,
dans laquelle la pré-charge a une valeur d'au moins une force de poussée dans une direction axiale des galets (22), appliquée à la plaque (40) latérale par les galets (22).

15. Installation (1) de production d'énergie par turbine éolienne, comprenant :
un rotor (3) de turbine éolienne ayant au moins une aube (2) ;
un arbre (6) rotatif accouplé au rotor (3) de la turbine éolienne;
une pompe (8) hydraulique configurée pour être entraînée par l'arbre (6) rotatif afin de produire de l'huile sous pression;
un moteur (10) hydraulique configuré pour être entraîné par l'huile sous pression et
une génératrice (16) configurée pour être entraînée par le moteur (10) hydraulique,
dans laquelle au moins l'un de la pompe (8) hydraulique ou du moteur (10) hydraulique est la machine hydraulique de type (20) à pistons radiaux suivant l'une quelconque des revendications 1 à 14.
